Europäisches Patentamt

European Patent Office

Office européen des brevets

(19)

(11) **EP 0 870 206 B1**

(12)

# FASCICULE DE BREVET EUROPEEN

(45) Date de publication et mention
de la délivrance du brevet:
**01.09.1999 Bulletin 1999/35**

(21) Numéro de dépôt: **96942410.0**

(22) Date de dépôt: **13.12.1996**

(51) Int Cl.6: **G01S 13/95**, G01S 7/02

(86) Numéro de dépôt international:
**PCT/FR96/02006**

(87) Numéro de publication internationale:
**WO 97/24629 (10.07.1997 Gazette 1997/30)**

(54) **PROCEDE DE DETERMINATION DU TAUX DE PRECIPITATION PAR RADAR A DOUBLE POLARISATION ET RADAR METEOROLOGIQUE LE METTANT EN OEUVRE**

VERFAHREN ZUM BESTIMMEN DER REGENERWARTUNG FÜR DOPPELPOLARISATIONSRADAR UND METEOROLOGISCHER RADAR DAFÜR

METHOD FOR DETERMINING THE PRECIPITATION RATIO BY DOUBLE POLARISATION RADAR AND METEOROLOGICAL RADAR FOR IMPLEMENTING SUCH PROCESS

(84) Etats contractants désignés:
**DE FR GB IT NL SE**

(30) Priorité: **26.12.1995 FR 9515483**

(43) Date de publication de la demande:
**14.10.1998 Bulletin 1998/42**

(73) Titulaire: **THOMSON-CSF**
**75008 Paris (FR)**

(72) Inventeurs:
 • SAUVAGEOT, Henri-Thomson-CSF S.C.P.I.
 F-94117 Arcueil Cédex (FR)
 • BEGUIN, Daniel-Thomson-CSF S.C.P.I.
 F-94117 Arcueil Cédex (FR)
 • DEVINNE, Régis-Thomson-CSF S.C.P.I.
 F-94117 Arcueil Cédex (FR)

(74) Mandataire: **Albert, Claude et al**
**Thomson-CSF Propriété Intellectuelle,**
**13, Avenue du Président Salvador Allende**
**94117 Arcueil Cédex (FR)**

(56) Documents cités:
 • **JOURNAL OF ATMOSPHERIC AND OCEANIC TECHNOLOGY, vol. 11, Avril 1994, pages 586-592, XP000578609 GORGUCCI ET AL.: "A Robust Estimator of Rainfall Rate Using Differential Reflectivity"**
 • **RADIO SCIENCE, vol. 19, no. 1, Janvier 1984 - Février 1984, pages 49-57, XP000578619 ULBRICH ET AL.: "Assessment of the contribution of differential polarization to improved rainfall measurements"**

## Description

La présente invention se rapporte à un procédé de détermination du taux de précipitation et du facteur de réflectivité d'un hydrométéore par radar à impulsions à longueur d'onde atténuée par les hydrométéores et à un radar météorologique à double polarisation mettant en oeuvre ce procédé.

En météorologie, on a besoin d'observer les chutes de pluies et autres hydrométéores notamment pour des problèmes de prévision à court terme. A cette fin, on a depuis de nombreuses années pensé à utiliser le radar pour déterminer quantitativement le taux de précipitation qui est un paramètre caractéristique de ces phénomènes. Pour cela on utilise des procédés basés sur la mesure de la réflectivité de la pluie ou des hydrométéores illuminés par un faisceau radar. Cependant pour la plupart de ces procédés, l'atténuation par les hydrométéores constitue un biais pour les mesures et il faut donc fonctionner à des longueurs d'onde aussi peu atténuées que possible, donc relativement élevées. Ceci entraîne des difficultés de mise en oeuvre et un coût important.

Un autre procédé plus attractif a été proposé : celui de l'atténuation sur deux longueurs d'onde et une seule polarisation qui a l'avantage d'être indépendant de la calibration du radar. Mais ce procédé conduit à certaines difficultés techniques pour obtenir des mesures ayant la précision requise. En effet, on rencontre des problèmes relatifs à la coïncidence des faisceaux aux deux longueurs d'onde et à la simultanéité des mesures.

De toutes les études faites, il ressort l'intérêt qu'il y aurait à utiliser des radars à plus faible longueur d'onde permettant de choisir des matériels plus compacts et moins coûteux. Cependant on se heurtait alors à des problèmes de correction d'atténuation très difficiles à résoudre, notamment en présence de fortes précipitations.

Une amélioration a été proposée consistant à utiliser un radar à double polarisation pour déterminer le taux de précipitation en utilisant la réflectivité différentielle. Des solutions de ce type sont décrites par exemple dans l'article de E. GORGUCCI et al. « A Robust Estimator of Rainfall Rate Using Differential Reflectivity » Journal of Atmospheric and Oceanic Technology, vol. 11, Avril 1994, pages 586-592, ou dans l'article de C.W. ULBRICH et al « Assessment of the contribution of differential polarization to improved rainfall measurements >> Radio Science, vol. 19, N° 1, Janvier-Février 1984, pages 49-57. Ces solutions améliorent les résultats obtenus pour des atténuations modérées, mais ne résolvent pas tous les problèmes rencontrés avec de fortes précipitations.

L'invention a pour objet un procédé remédiant à ces inconvénients malgré l'utilisation de longueurs d'onde faibles entraînant une atténuation relativement élevée des ondes électromagnétiques sur le trajet aller et retour à travers le milieu absorbant constitué par les hydrométéores (pluie, grêle, nuages).

L'invention est basée sur l'utilisation d'un radar à double polarisation pour mesurer les réflectivités selon les deux composantes de polarisation $\vec{H}$ et $\rightarrow$ en corrigeant les effets de l'atténuation sur les valeurs obtenues grâce aux mesures différentielles effectuées.

Selon l'invention, il est donc prévu un procédé de détermination du taux de précipitation et du facteur de réflectivité d'un hydrométéore par radar à impulsions à longueur d'onde atténuée par ledit hydrométéore, ledit radar étant un radar à double polarisation fournissant une double série de mesures du facteur de réflectivité atténué ($Z_{Ha}(r)$, $Z_{Va}(r)$) pour les différentes portes en distance selon chacune des polarisations, procédé dans lequel on estime le taux de précipitation (R) à partir du facteur de réflectivité pour une polarisation ($Z_H$) et du facteur de réflectivité différentielle non atténué ($Z_{DR}$), ledit procédé étant caractérisé en ce qu'il comprend les étapes suivantes ;

A) déterminer, dans chaque porte en distance du radar, une première estimation du taux de précipitation ($R_s$) à partir du facteur de réflectivité mesuré pour une seule polarisation par une combinaison des relations liant le facteur de réflectivité Z au taux de précipitation R, de la forme $Z = \alpha R^\beta$ où $\alpha$ et $\beta$ sont des paramètres, et le coefficient d'atténuation sur une seule polarisation au taux de précipitation ;
B) obtenir à partir de ladite première estimation du taux de précipitation une valeur estimée du facteur de réflectivité différentielle non atténué ($Z_{DRs}$) ;
C) déduire de ladite valeur estimée du facteur de réflectivité différentielle non atténué ($Z_{DRs}$) et de la mesure radar du facteur de réflectivité différentielle atténué ($Z_{DRa}$) une valeur estimée de l'atténuation polarimétrique différentielle ($A_{DP}$) ; et
D) chercher à obtenir l'égalité entre l'intégrale ($I_1(r, R)$) du taux de précipitation estimé dans l'étape A sur une seule polarisation du radar et l'intégrale ($I_2(r, R)$) du taux de précipitation déduite de ladite atténuation polarimétrique différentielle ($A_{DP}$), par ajustement itératif d'un des paramètres ($\alpha$) de la relation liant le facteur de réflectivité au taux de précipitation, tandis que l'autre paramètre ($\beta$) est maintenu à une valeur prédéterminée constante, de manière à pouvoir extraire les valeurs corrigées du facteur de réflectivité non atténué ($Z_{Hs}(r)$) et du taux de précipitation ($R_s(r)$).

Le grand avantage de ce procédé est qu'il est indépendant de la calibration du radar et de l'atténuation par d'éventuels nuages non détectés car il est basé sur une mesure différentielle.

Selon un autre aspect de l'invention, il est également prévu un radar météorologique à double polarisation fonctionnant à impulsions avec une longueur d'onde atténuée par les hydrométéores, pour la détermination du taux de précipitation et du facteur de réflectivité, ledit radar comportant :

- une antenne à double polarisation associée à des moyens pour extraire les modes correspondant à deux voies de polarisation orthogonales $\vec{H}$ et $\vec{V}$ ;
- un émetteur délivrant des impulsions aux deux voies de ladite antenne ;
- au moins une voie de réception pour traiter les signaux issus des deux voies de polarisation orthogonales ;

ledit radar étant caractérisé en ce qu'il comporte un dispositif de traitement numérique du signal prévu pour mettre en oeuvre le procédé décrit ci-dessus.

L'invention sera mieux comprise et d'autres caractéristiques et avantages apparaîtront à l'aide de la description ci-après et des dessins joints où :

- la figure 1 est un schéma d'un radar météorologique selon l'invention ; et
- la figure 2 est un schéma de principe d'un dispositif de traitement numérique du signal pour la mise en oeuvre du procédé selon l'invention.

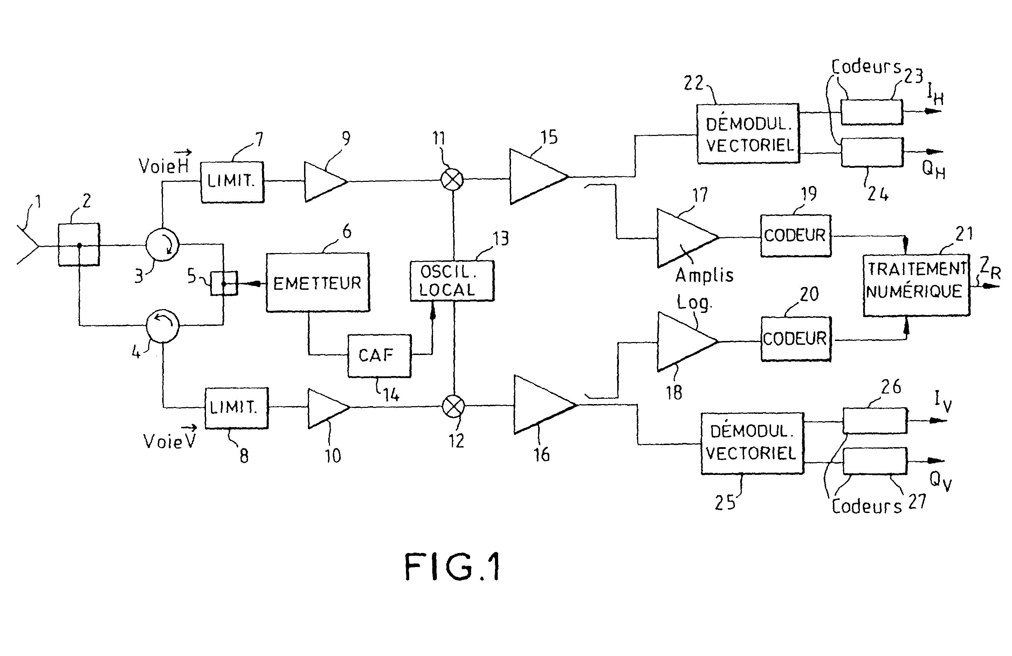

Sur la figure 1 est représenté le schéma d'un radar météorologique bipolarisation. Ce radar comporte une antenne à double polarisation comprenant une source primaire 1 à double polarisation illuminant un réflecteur (non représenté). Cette source est associée à un extracteur de mode 2 (orthomode) à deux voies de polarisation $\vec{H}$ et $\vec{V}$. Cette source primaire est alimentée par un émetteur à impulsions (6) fournissant des impulsions à fréquence de répétition adaptée à la portée désirée (par exemple $F_r$ =1 *kHz* pour une portée de 150 km). La puissance d'émission est distribuée aux deux voies de l'antenne par l'intermédiaire d'un té magique pour obtenir une polarisation orientée à 45° par rapport à l'horizontale ou par un coupleur 3dB, 5, pour obtenir une polarisation circulaire. Ces deux modes d'émission sont a priori équivalents puisqu'on veut émettre et recevoir deux signaux à polarisations orthogonales et les traiter en amplitude. La polarisation circulaire a un avantage secondaire en ce qui concerne le taux d'ondes stationnaires réfléchi par l'antenne vers l'émetteur.

On prévoit deux voies de réception identiques traitant les signaux prélevés par deux circulateurs de puissance 3 et 4. Chaque voie comprend de manière classique un limiteur 7, 8, un amplificateur 9, 10, un mélangeur 11, 12 pour passer en fréquence intermédiaire, un amplificateur à fréquence intermédiaire 15, 16 puis un amplificateur logarithmique 17, 18 pour obtenir une grande gamme dynamique et un codeur analogique-numérique 19, 20. Les signaux codés sont dirigés vers un dispositif de traitement numérique selon l'invention 21 dont on verra le détail ultérieurement et qui restitue en sortie le facteur de réflectivité Z et le taux de précipitation R corrigés. Les mélangeurs 11 et 12 reçoivent par ailleurs le signal d'un oscillateur local 13 contrôlé par un circuit de commande automatique de fréquence 14.

Pour certaines applications météorologiques où on veut obtenir des informations complémentaires sur la nature des hydrométéores, il est intéressant de mesurer la phase des signaux reçus par des voies de réception Doppler supplémentaires. Ces voies comprennent un circuit de démodulation vectorielle 22, 25 suivi de deux codeurs analogique-numérique 23, 24 d'une part, 26, 27 d'autre part pour restituer les signaux codés en quadrature $I_H$, $Q_H$ pour la voie $\vec{H}$ et $I_V$, $Q_V$, pour la voie $\vec{V}$.

Le principe du procédé selon l'invention est le suivant. A partir d'une seule polarisation, par exemple la voie $\vec{H}$, la relation entre le facteur de réflectivité atténué mesuré dans la pluie (ou autre hydrométéore) $Z_{Ha}(r)$ à la distance r et le coefficient d'atténuation a peut s'écrire :

$$Z_{Ha}(r) = Z_o(r) - 2\Delta r \sum_{i=1}^{n-1} a_i \qquad (1)$$

où $Z_o(r)$ est le facteur de réflectivité non atténué, $\Delta r$ est la largeur d'une porte en distance, $a_i$ est le coefficient d'atténuation propre à la porte en distance de rang i, exprimé en dB par unité de longueur, où $Z_{Ha}(r)$ et $Z_o(r)$ s'expriment en dBZ, c'est-à-dire = 10 log Z en mm$^6$ m$^{-3}$ et où r = n$\Delta$r.

Le coefficient d'atténuation a est lié au taux de précipitation R par la relation connue :

$$a = k_H R^{\gamma_H} \qquad (2)$$

où $k_H$ et $\gamma_H$ sont des paramètres pour la polarisation $\vec{H}$ qui dépendent faiblement de la température et de la distribution de taille des gouttes (DSD pour "Drop Size Distribution") et qui peuvent être calculés pour chaque longueur d'onde.

En combinant les relations (1) et (2), on obtient :

$$Z_o(r) = Z_{Ha}(r) + 2\Delta r k_H I_1 (r, R) \qquad (3)$$

avec:

$$I_1(r, R) = \sum_{i=1}^{n-1} R_i^{\gamma_H} \qquad (4)$$

$I_1$ représente l'intégrale du taux de précipitation le long du faisceau du radar pour la polarisation $\vec{H}$ choisie, c'est-à-dire qu'il traduit le cumul de l'atténuation dans les n-1 portes en distance précédant la porte n.

Or il existe une relation connue entre le facteur de réflectivité Z dû à la pluie et le taux de précipitation R :

$$Z = \alpha \, R^{\beta} \qquad (5)$$

où $\alpha$ et $\beta$ sont des paramètres. On peut ainsi écrire la relation (4) sous la forme équivalente :

$$I_1\left(r,R\right) = \alpha^{-\gamma/\beta} \sum_{i=1}^{n-1} Z_i^{\gamma/\beta} \qquad (4')$$

Les paramètres $\alpha$ et $\beta$ dépendent fortement de la DSD. En utilisant des valeurs approchées pour les quatre paramètres k, $\gamma$, $\alpha$ et $\beta$ dans les relations (3) et (5), on peut calculer des estimés corrigés $Z'(r)$ à partir de la série de n valeurs mesurées $Z_a(r)$ grâce une méthode itérative proposée par P.H. Hildebrand en 1978 dans "Iterative correction for attenuation of 5cm radar in rain" J.Appl.Meteor., 17, pages 508-514. Comme signalé dans cet article, des erreurs dans la DSD et la température supposées peuvent dégrader sérieusement ces estimés d'atténuation mais ces dégradations sont faibles par rapport à celles résultant d'erreurs de calibration du radar. Les paramètres concernés par l'erreur de calibration en radar étant ceux de la relation entre Z et R, l'incertitude essentielle sur $I_1(r,R)$ résulte de l'incertitude sur les paramètres $\alpha$ et $\beta$.

Pour lever ces incertitudes, on fait donc appel à des mesures différentielles utilisant les deux polarisations d'un radar. La réflectivité différentielle $Z_{DR}$ est définie par:

$$Z_{DR} = Z_H \text{-} Z_V \qquad (6)$$

où Z s'exprime en dBZ et où les indices H et V correspondent aux deux polarisations du radar, par exemple horizontale et verticale.

Pour les longueurs d'onde atténuées, en utilisant la relation (1) pour les polarisation H et V et en soustrayant les termes V des termes H, on obtient :

$$Z_{DRa}(r) = Z_{DRs}(r) \text{-} 2 \, A_{DP}(r) \qquad (7)$$

où $Z_{DRa}$ est la mesure radar polarimétrique atténuée, $Z_{DRs} = Z_{OH} \text{-} Z_{OV}$ est le coefficient de réflectivité différentielle non atténué, dû seulement à la forme des gouttes, et $A_{DP}$ est l'atténuation polarimétrique différentielle pour un trajet de l'onde électromagnétique, soit :

$$A_{DP}\left(r\right) = \Delta r \sum_{i=1}^{n-1}\left(a_{iH} - a_{iV}\right) \qquad (8)$$

Avec une DSD supposée, le coefficient de réflectivité différentielle $Z_{DRs}$ dû aux formes des gouttes peut être calculé comme une fonction du taux de précipitation :

$$Z_{DRs} = f(R) \qquad (9)$$

Les coefficients d'atténuation $a_{iH}$ et $a_{iV}$ de la relation (8) sont donnés par la relation (2) pour les polarisations H et V. Pour la DSD supposée, les paramètres $k_H$, $k_V$, $\gamma_H$ et $\gamma_V$ peuvent être calculés. Le calcul montre que la différence $a_H$ - $a_V$ ne dépend pas de manière significative de la DSD. Pour une longueur d'onde donnée, $k_H$ et $k_V$ sont nettement différents mais $\gamma_H \simeq \gamma_V \simeq \gamma$.

En combinant les relations (2) et (8), on a donc :

$$A_{DP}(r) = \Delta r (k_H \text{-} k_V) \, I_2 \, (r, R)) \qquad (10)$$

avec:

$$I_2\left(r, R\right) = \sum_{i=1}^{n-1} R_i^{\gamma} \qquad (11)$$

On peut remarquer que l'on peut écrire la relation (11) comme la relation (4'), c'est-à-dire en fonction de Z.

$I_2(r, R)$ représente l'intégrale du taux de précipitation déduite de l'atténuation différentielle $A_{DP}$, $k_H$ - $k_V$ étant supposé connu avec précision. Comme elle résulte d'une mesure différentielle, $A_{DP}$ ne dépend pas de la calibration du radar.

Cela étant, dans l'estimation de $I_1$ et $I_2$, seuls les paramètres $\alpha$ et $\beta$ sont variables en raison de la variabilité naturelle de la DSD dans la pluie et des erreurs de calibration.

Dans le procédé selon l'invention, il est proposé de maintenir $\beta$ à une valeur constante, égale à une valeur moyenne climatologique qui correspond à la longueur d'onde et au type de chute de pluie observé, et d'ajuster le paramètre $\alpha$ en utilisant l'atténuation différentielle $A_{DP}$.

Cette hypothèse sur $\beta$ a été confirmée par de nombreuses mesures disponibles dans la littérature.

Le principe est donc de déterminer $I_1$ à partir de la série de mesures sur une seule des polarisations en choisissant une valeur arbitraire intermédiaire de $\alpha$, d'estimer $I_2$ à partir des mesures différentielles du radar et d'un calcul utilisant $I_1$ pour estimer le facteur de réflectivité différentielle non atténué et de comparer $I_1$ et $I_2$ pour modifier éventuellement $\alpha$ jusqu'à ce que $I_1 \simeq I_2$, ce qui permet alors d'extraire les estimations corrigées des coefficients de réflectivité non atténués $Z_i(r)$ et des taux de précipitation $R_i(r)$.

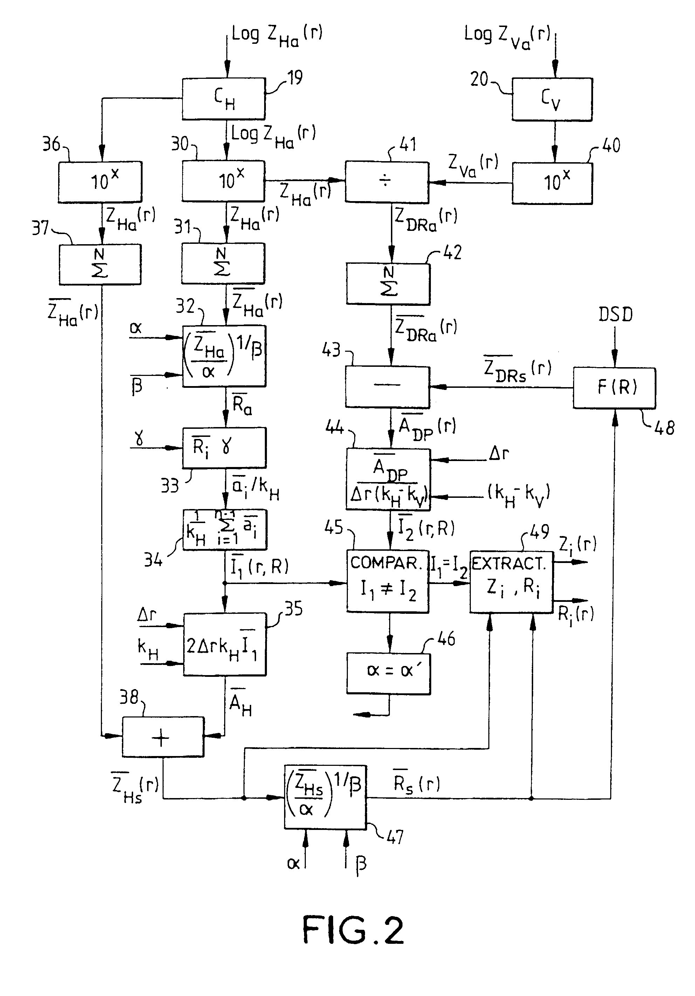

Un dispositif de traitement numérique permettant de mettre en oeuvre ce procédé est représenté sur la figure 2. La partie gauche de la figure concerne le traitement d'une seule polarisation, la polarisation H, cependant que la partie droite est relative au traitement différentiel.

Les signaux logarithmiques fournis par le codeur 19 de la voie H sont retraduits en signaux linéaires $Z_{Ha}(r)$ dans l'étape 30. Ces signaux sont moyennés sur N impulsions du radar (étape 31) puis on calcul le taux de précipitation estimé $\overline{R}_a$ à partir de paramètres $\alpha$ et $\beta$ prédéterminés, arbitrairement pour $\alpha$, selon la relation (5) (étape 32), ceci pour chaque porte en distance i.

L'étape 33 consiste à calculer les coefficients d'atténuation $\overline{a}_i$ à partir de la relation (2).

On en déduit alors la valeur estimée $\overline{I}_1(r, R)$ selon les relations (2) et (4) (étape 34).

Par ailleurs, par les étapes 36 et 37, on calcule le facteur de réflectivité atténué $\overline{Z}_{Ha}(r)$ déduit de la série de mesures sur la seule polarisation H et, par l'étape 35, on estime le terme d'atténuation $\overline{A}_H$ de la relation (3). En appliquant cette relation (3) par l'étape 38 consistant en une sommation, on obtient un estimé $Z_{Hs}(r)$ du coefficient de réflectivité non atténué pour la polarisation H puis, par l'étape 47, un estimé du taux de précipitation corrigé $\overline{R}_S(r)$ en appliquant la relation (5) avec les paramètres $\alpha$ et $\beta$ déjà choisis.

A partir de cette valeur estimée, on peut calculer par l'étape 48 une valeur estimée du facteur de réflectivité différentielle non atténué $Z_{DRs}(r)$ selon la relation (9).

D'autre part, en partant des signaux codés des voies H et V fournis par 30 et 40, on effectue (étape 41) le rapport $Z_{Ha}(r)/Z_{Va}(r)$ qui donne la mesure radar polarimétrique atténuée $Z_{DRa}(r)$ moyennée ensuite sur N impulsions dans l'étape 42. La différence (étape 43) entre cette valeur moyennée et la valeur estimée du facteur de réflectivité différentielle non atténué fournie par 48 constitue l'estimation de l'atténuation polarimétrique différentielle $\overline{A}_{DP}(r)$. L'étape 44 fournit à partir des valeurs $\Delta r$ et $k_H - k_V$ la valeur estimée de $\overline{I}_2(r, R)$ selon la relation (10). Dans l'étape 45, on compare alors $\overline{I}_1$ et $\overline{I}_2$.

Si $\overline{I}_1 \neq \overline{I}_2$, alors l'étape 46 consiste à modifier le paramètre $\alpha$ d'un incrément $\Delta\alpha$ dans le sens convenable et à appliquer la nouvelle valeur $\alpha'$ aux étapes 32 et 47 pour recommencer les calculs. On renouvelle ces opérations jusqu'à ce que l'on obtienne $\overline{I}_1 = \overline{I}_2$ ce qui correspond à la bonne valeur donnée à $\alpha$. On peut alors (étape 49) extraire les valeurs corrigées du facteur de réflectivité non atténué $Z_i(r) = \overline{Z}_{Hs}(r)$ et du taux de précipitation $R_i(r) = \overline{R}_s(r)$.

Dans l'exposé du principe du procédé selon l'invention, on a supposé pour la relation (9) que $Z_{DRs}$,

de même que $k_H$ et $k_V$ pour la relation (10), étaient calculés pour la seule DSD supposée. Ceci est acceptable car, pour des conditions climatiques données, les DSD moyennées ont des paramètres stables. On peut donc choisir une DSD particulière à partir de considérations climatologiques.

D'autre part, il est préférable de choisir des portes en distance à la distance r où le facteur de réflectivité est faible car alors $Z_{DRs}$ est faible et l'erreur d'estimation selon la relation (9) est, elle aussi, faible. Ce choix d'une porte particulière est d'autant plus justifié et facilité qu'on peut remplacer une porte à la distance r par une autre autour dé r avec des facteurs de réflectivité différents sans que les valeurs $I_1$, $I_2$ et $\alpha$ soient modifiées de façon significative.

On peut d'ailleurs calculer $\alpha$ à partir de deux ou trois portes contiguës et utiliser la moyenne pour réduire les effets de dispersion de la DSD.

On peut aussi remarquer qu'on peut subdiviser une direction radiale observée en plusieurs segments auxquels le procédé selon l'invention peut être appliqué successivement.

Le procédé décrit ci-dessus est très peu sensible aux erreurs d'échantillonnage aléatoires sur le coefficient de réflectivité mesuré par le radar sur une polarisation ou sur les valeurs différentielles.

Un des principaux avantages du procédé selon l'invention a déjà été mentionné : il s'agit de son indépendance vis à vis de la calibration du radar et de l'atténuation due à des nuages non détectés.

On peut ajouter qu'une autre utilisation possible est la détection qualitative de la grêle. En effet quand de la grêle est présente dans une cellule de pluie, comme les grains de grêle ont une forme presque sphérique, ils produisent un facteur de réflectivité élevé pour les deux polarisations avec $Z_H \simeq Z_V$ et donc un facteur de réflectivité différentielle sensiblement nul. Par contre, on a une forte atténuation indépendante de la polarisation d'où une contribution nulle à l'atténuation différentielle $A_{DP}$. Ainsi la présence de grêle modifie $I_1$ mais pas de manière correspondante $I_2$, contrairement au cas d'une pluie homogène. On constate alors une modification notable de $\alpha$ qui peut être utilisée comme indicateur de grêle.

Il faut également remarquer que, si la description ci-dessus a été faite dans le cadre de l'utilisation de l'atténuation polarimétrique différentielle $A_{DP}$, on pourrait aussi faire fonctionner le procédé selon l'invention sur le déphasage différentiel $K_{DP} = K_H - K_V$ exprimé en degré.km de propagation.

Bien entendu, les exemples décrits ne sont nullement limitatifs de l'invention. En particulier, le radar météorologique décrit pourrait utiliser une seule voie de réception au lieu des deux voies décrites, les signaux des deux polarisations étant commutés en entrée pour utiliser la voie en partage dans le temps et "décommutés" en sortie. Le rythme de commutation doit simplement être choisi pour que les signaux reçus sur les polarisations *H* et *V* ne soient pas décorrélés pendant la durée de la commutation.

D'autre part, peut remarquer que les signaux *I* et *Q* disponibles sur les sorties des voies Doppler permettent de calculer l'amplitude de signal $\sqrt{I^2 + Q^2}$ dans chacune des voies *H* et *V,* amplitude qui pourrait être utilisée à la place des signaux issus des codeurs 19 et 20 pour éviter l'utilisation des voies 17, 19 et 18, 20. L'inconvénient serait cependant de ne pas disposer de la dynamique résultant de l'emploi d'amplificateurs logarithmiques.

Enfin, dans le dispositif de traitement selon l'invention de la figure 2, on pourrait penser à continuer à utiliser les signaux logarithmiques au lieu de repasser en signaux linéaires.

**Revendications**

1. Procédé de détermination du taux de précipitation et du facteur de réflectivité d'un hydrométéore par radar à impulsions à longueur d'onde atténuée par ledit hydrométéore, ledit radar étant un radar à double polarisation fournissant une double série de mesures du facteur de réflectivité atténué ($Z_{Ha}(r)$, $Z_{Va}$ $(r)$) pour les différentes portes en distance selon chacune des polarisations, procédé dans lequel on estime le taux de précipitation (R) à partir du facteur de réflectivité pour une polarisation ($Z_H$) et du facteur de réflectivité différentielle non atténué ($Z_{DR}$), le ledit procédé étant caractérisé en ce qu'il comprend les étapes suivantes ;

   A) déterminer, dans chaque porte en distance du radar, une première estimation du taux de précipitation $(R_s)$ à partir du facteur de réflectivité mesuré pour une seule polarisation par une combinaison des relations liant le facteur de réflectivité Z au taux de précipitation R, de la forme $Z = \alpha\, R^\beta$ où $\alpha$ et $\beta$ sont des paramètres, et le coefficient d'atténuation sur une seule polarisation au taux de précipitation ;
   B) obtenir à partir de ladite première estimation du taux de précipitation une valeur estimée du facteur de réflectivité différentielle non atténué ($Z_{DRs}$);
   C) déduire de ladite valeur estimée du facteur de réflectivité différentielle non atténué ($Z_{DRs}$) et de la mesure radar du facteur de réflectivité différentielle atténué ($Z_{DRa}$) une valeur estimée de l'atténuation polarimétrique différentielle ($A_{DP}$) ; et
   D) chercher à obtenir l'égalité entre l'intégrale ($I_1\ (r,R)$) du taux de précipitation estimé dans l'étape A sur une seule polarisation du radar et l'intégrale $(I_2\ (r, R))$ du taux de précipitation déduite de ladite atténuation polarimétrique différentielle ($A_{DP}$), par ajustement itératif d'un des

paramètres ($\alpha$) de la relation liant le facteur de réflectivité au taux de précipitation tandis que l'autre paramètre ($\beta$) est maintenu à une valeur prédéterminée constante, de manière à pouvoir extraire les valeurs corrigées du facteur de réflectivité non atténué ($Z_{Hs}\ (r)$) et du taux de précipitation $(R_s(r))$.

2. Procédé selon la revendication 1, caractérisé en ce que l'étape A) comprend les étapes suivantes :

   a) calculer sur une première desdites séries de mesures ($Z_{Ha}(r)$) des valeurs estimées du taux de précipitation ($R_i$) pour les différentes portes en distance (1 à n-1) à partir de paramètres ($\alpha$, $\beta$) fixés arbitrairement ;
   b) déduire desdites valeurs estimées du taux de précipitation ($R_i$) une première valeur estimée ($I_1(r,\ R)$) caractéristique de l'atténuation due aux précipitations, ladite première valeur estimée étant l'intégrale du taux de précipitation estimé sur une seule polarisation ;
   c) déterminer à partir de ladite première valeur estimée ($I_1\ (r, R)$) et de la première série de mesures ($Z_{Ha}(r)$) une valeur estimée du facteur de réflectivité non atténué ($Z_{Hs}(r)$) et du taux de précipitation corrigé ($R_s$).

3. Procédé selon l'une des revendications 1 ou 2, caractérisé en ce que ladite étape B) comprend l'étape suivante :

   d) calculer, à partir de ladite valeur estimée du taux de précipitation corrigé $(R_s)$ et d'une distribution donnée des gouttes (DSD), une valeur estimée du facteur de réflectivité différentielle non atténué ($ZDR_s(r)$).

4. Procédé selon l'une des revendications 1 à 3, caractérisé en ce que ladite étape C) comprend les étapes suivantes :

   e) calculer, à partir de ladite double série de mesures du facteur de réflectivité atténué ($Z_{Ha}$ $(r)$, $Z_{Va}(r)$), la mesure du facteur de réflectivité différentielle atténué $(Z_{DRa}(r))$;
   f) déduire de la mesure du facteur de réflectivité différentielle atténué $(Z_{DRa}(r))$ et de la valeur estimée du facteur de réflectivité différentielle non atténué ($Z_{DRs}(r)$) obtenue lors de l'étape d) une valeur estimée de l'atténuation polarimétrique différentielle ($A_{DP}$).

5. Procédé selon l'une quelconque des revendications 1 à 4, caractérisé en ce que ladite étape D) comprend les étapes suivantes :

   g) déduire de ladite valeur estimée de l'atténuation polarimétrique différentielle ($A_{DP}$) une se-

conde valeur estimée $(l_2(r,R))$ caractéristique de l'atténuation due aux précipitations, qui est l'intégrale du taux de précipitation ;

h) comparer lesdites première $(l_1(r,R))$ et seconde $(l_2(r,R))$ valeurs estimées caractéristiques de l'atténuation due aux précipitations ;

i) si ladite comparaison selon l'étape h) indique que desdites première et seconde valeurs estimées sont différentes, modifier au moins un desdits paramètres $(\alpha,\beta)$ de l'étape a) et reprendre les étapes a) à h);

j) si ladite comparaison selon l'étape h) indique que lesdites première et seconde valeurs estimées sont égales, extraire lesdites valeurs estimées du facteur de réflectivité non atténué $(Z_{Hs}(r))$ et du taux de précipitation corrigé $(R_s)$.

6. Procédé selon l'une quelconque des revendications 2 à 5, caractérisé en ce que l'étape a) consiste à :

a.1) moyenner lesdites mesures $(Z_{Ha}(r))$ de ladite première série sur N impulsions du radar ;

a.2) calculer pour chaque porte en distance (i) des valeurs estimées du taux de précipitation $(\overline{R}_i)$ à partir de paramètres $(\alpha,\beta)$ fixés arbitrairement selon la relation :

$$\overline{R}_i = \left( \frac{\overline{Z}_{Ha}(r)}{\alpha} \right)^{1/\beta}$$

7. Procédé selon l'une quelconque des revendications 2 à 6, caractérisé en ce que l'étape b) consiste à :

b.1) calculer à partir des valeurs estimées du taux de précipitation $(\overline{R}_i)$ les coefficients d'atténuation $(\overline{a}_i)$ dans chaque porte en distance selon la relation :

$$\overline{a}_i/k_H = \overline{R}_i^{\;\gamma_H}$$

où $k_H$ et $\gamma_H$ sont des paramètres prédéterminés pour une température et une distribution de taille de goutte données ; et

b.2) déduire de ces coefficients d'atténuation $(\overline{a}_i)$ ladite première valeur estimée $(\overline{l}_1(r,R))$ selon la relation :

$$\overline{l}_1(r, R) = \sum_{i=1}^{n-1} \overline{a}_i / k_H$$

où n est le nombre de portes en distance pour une distance r du radar.

8. Procédé selon l'une quelconque des revendications 2 à 7, caractérisé en ce que l'étape c) consiste à :

c.1) calculer, à partir de ladite première valeur estimée $\overline{l}_1(r,R)$, une valeur d'atténuation $\overline{A}$ telle que :

$$\overline{A} = 2 \, \Delta r \, k_H \, \overline{l}_1(r,R)$$

où $\Delta r$ est la largeur d'une porte en distance ;

c.2) moyenner lesdites mesures $(Z_{Ha}(r))$ de ladite première série sur N impulsions du radar;

c.3) faire la somme de ladite atténuation $\overline{A}$ et de la valeur moyennée du facteur de réflectivité atténué $\overline{Z}_{Ha}(r)$ pour obtenir une valeur estimée $\overline{Z}_{Hs}(r)$ du facteur de réflectivité non atténué; et

c.4) calculer une valeur estimée $\overline{R}_s$ du taux de précipitation corrigé selon la relation :

$$\overline{R}_s = \left( \frac{\overline{Z}_{Hs}(r)}{\alpha} \right)^{1/\beta}$$

9. Procédé selon l'une quelconque des revendications 4 à 8, caractérisé en ce que l'étape e) consiste à :

e.1) faire le rapport des mesures des séries de ladite double série $(Z_{Ha}(r),Z_{Va}(r))$, pour obtenir les valeurs du facteur de réflectivité différentielle atténué $(Z_{DRa}(r))$ du radar;

e.2) moyenner lesdites valeurs du facteur de réflectivité différentielle atténué sur N impulsions du radar.

10. Procédé selon la revendication 5, caractérisé en ce que l'étape f) consiste à effectuer la différence entre ladite valeur estimée du facteur de réflectivité différentielle non atténué $(\overline{Z}_{DRs}(r))$ obtenue selon l'étape d) et ladite valeur moyennée du facteur de réflectivité différentielle atténué $(\overline{Z}_{DRa}(r))$ pour obtenir une valeur estimée de l'atténuation polarimétrique différentielle $(\overline{A}_{DP}(r))$ sur un trajet radar.

11. Procédé selon l'une quelconque des revendications 5 à 10, caractérisé en ce que l'étape g) consiste à calculer, à partir de ladite valeur estimée de l'atténuation polarimétrique différentielle $(\overline{A}_{DP}(r))$, ladite seconde valeur estimée $\overline{l}_2(r,R)$ selon la relation :

$$\overline{l}_2(r,R) = \frac{\overline{A}_{DP}(r)}{\Delta r(k_H - k_V)}$$

où $k_V$ est un paramètre prédéterminé de la même manière que $k_H$ pour la seconde série de mesures $(Z_{Va}(r))$.

12. Radar météorologique à double polarisation fonctionnant à impulsions avec une longueur d'onde atténuée par les hydrométéores, pour la détermination du taux de précipitation et du facteur de réflectivité, ledit radar comportant :

- une antenne (1) à double polarisation associée à des moyens (2, 3, 4) pour extraire les modes correspondant à deux voies de polarisation orthogonales $\vec{H}$ et $\vec{V}$ ;
- un émetteur (5, 6) délivrant des impulsions aux deux voies de ladite antenne ;
- au moins une voie de réception (7, 9, 11, 13, 15, 17, 19 ; 10, 12, 13, 16, 18, 20) pour traiter les signaux issus des deux voies de polarisation orthogonales ;

ledit radar étant caractérisé en ce qu'il comporte un dispositif de traitement numérique du signal (21) prévu pour mettre en oeuvre le procédé selon l'une quelconque des revendications 1 à 11.

13. Radar selon la revendication 12, caractérisé en ce qu'il comprend à la sortie desdites voies de réception des amplificateurs logarithmiques (17, 18) pour augmenter la gamme dynamique et en ce que ledit dispositif de traitement numérique (21) comporte en entrée des moyens de conversion (30, 36, 40) pour retrouver les valeurs des signaux reçus.

14. Radar selon l'une des revendications 12 ou 13, caractérisé en ce qu'il comprend en outre deux voies de réception Doppler (22 à 24 ; 25 à 27) associées respectivement aux sorties des voies de réception des deux polarisations.

15. Radar selon l'une quelconque des revendications 12 à 14, caractérisé en ce qu'il comporte une seule voie de réception associée à des moyens de commutation en entrée et en sortie commandés en synchronisme pour traiter alternativement les deux polarisations, le rythme de commutation étant tel que les signaux reçus selon les deux polarisations ne sont pas décorrélés pendant la durée de la commutation.

**Claims**

1. Method for determining the precipitation rate and reflectivity factor of a hydrometeor using pulsed radar operating at a wavelength which is attenuated by the said hydrometeor, the said radar being a dual polarization radar delivering a double series of measurements of the attenuated reflectivity factor $(Z_{Ha}\ (r),\ Z_{Va}\ (r))$ for the various distance windows according to each of the polarizations, in which method the precipitation rate (R) is estimated on the basis of the reflectivity factor for one polarization

$(Z_H)$ and the unattenuated differential reflectivity factor $(Z_{DR})$, the said method being characterized in that it comprises the following steps:

A) in each distance window of the radar, determining a first estimate of the precipitation rate $(R_s)$ on the basis of the reflectivity factor measured for a single polarization, by a combination of the equations connecting the reflectivity factor Z with the precipitation rate R, of the form Z $= \alpha\ R^{\beta}$ where $\alpha$ and $\beta$ are parameters, and the attenuation coefficient for a single polarization with the precipitation rate;
B) on the basis of the said first estimate of the precipitation rate, obtaining an estimated value of the unattenuated differential reflectivity factor $(Z_{DRs})$;
C) from the said estimated value of the unattenuated differential reflectivity factor $(Z_{DRs})$ and the radar measurement of the attenuated differential reflectivity factor $(Z_{DRa})$, deducing an estimated value of the differential polarimetric attenuation $(A_{DP})$; and
D) attempting to obtain equality between the integral $(I_1\ (r,\ R))$ of the precipitation rate estimated in step A for a single polarization of the radar and the integral $(I_2\ (r,\ R))$ of the precipitation rate deduced from the said differential polarimetric attenuation $(A_{DP})$, by iterative adjustment of one of the parameters $(\alpha)$ in the equation connecting the reflectivity factor with the precipitation rate, while the other parameter $(\beta)$ is kept at a predetermined constant value, so as to make it possible to extract the corrected values of the unattenuated reflectivity factor $(Z_{Hs}\ (r))$ and of the precipitation rate $(R_s\ (r))$.

2. Method according to Claim 1, characterized in that step A) comprises the following steps:

a) for a first of the said series of measurements $(Z_{Ha}\ (r))$, calculating estimated values of the precipitation rate $(R_i)$ for the various distance windows (1 to n-1) on the basis of arbitrarily fixed parameters $(\alpha,\ \beta)$;
b) from the said estimated values of the precipitation rate $(R_i)$, deducing a first estimated value $(I,\ (r,\ R))$ characteristic of the attenuation due to the precipitation, the said first estimated value being the integral of the precipitation rate estimated for a single polarization;
c) on the basis of the said first estimated value $(I_1\ (r,\ R))$ and a first series of measurements $(Z_{Ha}\ (r))$, determining an estimated value of the unattenuated reflectivity factor $(Z_{Hs}\ (r))$ and the corrected precipitation rate $(R_s)$.

3. Method according to one of Claims 1 and 2, characterized in that the said step B) comprises the following step:

d) on the basis of the said estimated value of the corrected precipitation rate $(R_s)$ and a given drop-size distribution (DSD), calculating an estimated value of the unattenuated differential reflectivity factor $(Z_{DRs}(r))$.

4. Method according to one of Claims 1 to 3, characterized in that the said step C) comprises the following steps:

e) on the basis of the said double series of measurements of the attenuated reflectivity factor $(Z_{Ha}(r), Z_{Va}(r))$, calculating the measurement of the attenuated differential reflectivity factor $(Z_{DRa}(r))$;
f) from the measurement of the attenuated differential reflectivity factor $(Z_{DRa}(r))$ and the estimated value of the unattenuated differential reflectivity factor $(Z_{DRs}(r))$ obtained during step d), deducing an estimated value of the differential polarimetric attenuation $(A_{DP})$.

5. Method according to any one of Claims 1 to 4, characterized in that the said step D) comprises the following steps:

g) from the said estimated value of the differential polarimetric attenuation $(A_{DP})$, deducing a second estimated value $(I_2(r, R))$ characteristic of the attenuation due to the precipitation, namely the integral of the precipitation rate;
h) comparing the said first $(I_1(r, R))$ and second $(I_2(r, R))$ estimated values characteristic of the attenuation due to the precipitations;
i) if the said comparison according to step h) indicated that the said first and second estimated values are different, changing at least one of the said parameters $(\alpha, \beta)$ in step a) and repeating steps a) to h);
j) if the said comparison according to step h) indicates that the said first and second estimated values are equal, extracting the said estimated values of the unattenuated reflectivity factor $(Z_{Hs}(r))$ and of the corrected precipitation rate $(R_s)$.

6. Method according to any one of Claims 2 to 5, characterized in that step a) consists in:

a.1) averaging the said measurements $(Z_{Ha}(r))$ in the said first series over N pulses of the radar;
a.2) for each distance window (i), calculating estimated values of the precipitation rate $(\bar{R}_i)$ on the basis of arbitrarily fixed parameters $(\alpha, \beta)$, according to the equation:

$$\bar{R}_i = \left( \frac{\bar{Z}_{Ha}(r)}{\alpha} \right)^{1/\beta}$$

7. Method according to any one of Claims 2 to 6, characterized in that step b) consists in:

b.1) on the basis of the estimated values of the precipitation rate $(\bar{R}_i)$, calculating the attenuation coefficients $(\bar{a}_i)$ in each distance window, according to the equation:

$$\bar{a}_i/k_H = \bar{R}_i^{\gamma_H}$$

where $k_H$ and $\gamma_H$ are predetermined parameters for a given temperature and a given drop-size distribution; and
b.2) from these attenuation coefficients $(\bar{a}_i)$, deducing the said first estimated value $(\bar{I}_1(r,R))$, according to the equation:

$$\bar{I}_1(r, R) = \sum_{i=1}^{n-1} \bar{a}_i / k_H$$

where n is the number of distance windows for a distance r from the radar.

8. Method according to any one of Claims 2 to 7, characterized in that step c) consists in:

c.1) on the basis of the said first estimated value $(I_1(r,R))$, calculating an attenuation value $\bar{A}$ such that:

$$\bar{A} = 2 \, \Delta r \, k_H \, \bar{I}_1(r,R)$$

where $\Delta r$ is the width of a distance window;
c.2) averaging the said measurements $(Z_{Hz}(r))$ in the said first series over N pulses of the radar;
c.3) taking the sum of the said attenuation $\bar{A}$ and the averaged value of the attenuated reflectivity factor $\bar{Z}_{Ha}(r)$ in order to obtain an estimated value $\bar{Z}_{Hs}(r)$ of the unattenuated reflectivity factor; and
c.4) calculating an estimated value $\bar{R}_s$ of the corrected precipitation rate, according to the equation:

$$\bar{R}_s = \left( \frac{\bar{Z}_{Hs}(r)}{\alpha} \right)^{1/\beta}$$

9. Method according to any one of Claims 4 to 8, characterized in that step e) consists in:

e.1) taking the ratio of the measurements in the series of the said double series $(Z_{Ha}(r),Z_{Va}(r))$, in order to obtain the values of the attenuated differential reflectivity factor $(Z_{DRa}(r))$ of the radar;

e.2) averaging the said values of the attenuated differential reflectivity factor over N pulses of the radar.

10. Method according to Claim 5, characterized in that step f) consists in taking the difference between the said estimated value of the unattenuated differential reflectivity factor $(\bar{Z}_{DRs}(r))$ obtained according to step d) and the said averaged value of the attenuated differential reflectivity factor $(\bar{Z}_{DRa}(r))$, in order to obtain an estimated value of the differential polarimetric attenuation $(\bar{A}_{DP}(r))$ for a radar path.

11. Method according to any one of Claims 5 to 10, characterized in that step g) consists in, on the basis of the said estimated value of the differential polarimetric attenuation $(\bar{A}_{DP}(r))$, calculating the said second estimated value $\bar{I}_2(r,R)$, according to the equation:

$$\bar{I}_2(r,R) = \frac{\bar{A}_{DP}(r)}{\Delta r(k_H - k_V)}$$

where $k_V$ is a parameter predetermined, in the same way as $k_h$, for the second series of measurements $(Z_{Va}(r))$,

12. Dual polarization meteorological radar operating with pulses at a wavelength which is attenuated by hydrometeors, for determining the precipitation rate and the reflectivity factor, the said radar having:

- a dual polarization antenna (1) associated with means (2, 3, 4) for extracting the modes corresponding to two orthogonal polarization channels $\vec{H}$ and $\vec{V}$;
- a transmitter (5, 6) delivering pulses to the two channels of the said antenna;
- at least one reception channel (7, 9, 11, 13, 15, 17, 19; 10, 12, 13, 16, 18, 20) for processing the signals output by the two orthogonal polarization channels;

the said radar being characterized in that it has a digital signal processing device (21) designed for implementing the method according to any one of Claims 1 to 11.

13. Radar according to Claim 12, characterized in that, at the output of the said reception channels, it comprises logarithmic amplifiers (17, 18) for increasing the dynamic range, and in that the said digital processing device (21) has conversion means (30, 36, 40) at its input in order to recover the values of the received signals.

14. Radar according to one of Claims 12 and 13, characterized in that it furthermore comprises two Doppler reception channels (22 to 24; 25 to 27), associated respectively with the outputs of the reception channels for the two polarizations.

15. Radar according to any one of Claims 12 to 14, characterized in that it has a single reception channel, associated with input and output switching means controlled synchronously in order to process the two polarizations alternately, the switching rate being such that the signals received in the two polarizations are not decorrelated during the switching time.

**Patentansprüche**

1. Verfahren zur Bestimmung des Niederschlagswerts und des Reflektivitätsfaktors von Niederschlägen durch ein Impulsradarsystem mit durch die Niederschläge gedämpften Wellen, wobei das Radarsystem ein System mit doppelter Polarisation ist und eine doppelte Serie von Meßwerten des gedämpften Reflektivitätsfaktors $(Z_{Ha}(r), Z_{Va}(r))$ für die verschiedenen Entfernungsfenster gemäß jeder der Polarisationen liefert, wobei in dem Verfahren der Niederschlagswert (R) ausgehend vom Reflektivitätsfaktor für eine Polarisation $(Z_H)$ und vom ungedämpften Reflektivitätsfaktor $(Z_{DR})$ geschätzt wird, dadurch gekennzeichnet, daß das Verfahren die folgenden Schritte aufweist:

A) Man bestimmt in jedem Entfernungsfenster des Radarsystems einen ersten Schätzwert der Niederschläge $(R_s)$ ausgehend vom in einer Polarisation gemessenen Reflektivitätsfaktor durch eine Kombination der Gleichungen, die den Reflektivitätsfaktor Z mit dem Niederschlagswert R in der Form $Z = \alpha \cdot R^\beta$ verknüpfen, wobei $\alpha$ und $\beta$ Parameter sind, und der Gleichungen, die den Dämpfungskoeffizienten in einer einzigen Polarisation mit dem Niederschlagswert verknüpfen;

B) ausgehend von dem ersten Schätzwert der Niederschläge erhält man einen Schätzwert des ungedämpften Differential-Reflektivitätsfaktors $(Z_{DRs})$;

C) vom Schätzwert des ungedämpften Differential-Reflektivitätsfaktors $(Z_{DRs})$ und der Radarmessung des gedämpften Differential-Reflektivitätsfaktors $(Z_{DRa})$ leitet man einen Schätzwert der polarimetrischen Differentialdämpfung $(A_{DP})$ ab;

D) man versucht, die Gleichheit zwischen dem Integralwert ($I_1(r,R)$) des im Verfahrensschritt A geschätzten Niederschlagswerts in einer einzigen Polarisation des Radarsystems mit dem Integralwert ($I_2(r,R)$) des von der polarimetrischen Differentialdämpfung ($A_{DP}$) abgeleiteten Niederschlagswerts durch iterative Anpassung eines der Parameter ($\alpha$) der den Reflektivitätsfaktor mit dem Niederschlagswert verknüpfenden Gleichung zu erreichen, während der andere Parameter ($\beta$) auf einem konstanten vorgegebenen Wert gehalten wird, sodaß man die korrigierten Werte des ungedämpften Reflektivitätsfaktors ($Z_{Hs}(r)$) und des Niederschlagswerts ($R_s(r)$) entnehmen kann.

2. Verfahren nach Anspruch 1, dadurch gekennzeichnet, daß der Schritt A die folgenden Teilschritte enthält:

a) Aus einer ersten der Meßserien ($Z_{Ha}(r)$) werden Schätzwerte der Niederschläge ($R_i$) für die verschiedenen Abstandsfenster (1 bis n-1) ausgehend von willkürlich festgelegten Parametern ($\alpha$, $\beta$) berechnet;
b) aus den Schätzwerten der Niederschläge ($R_i$) wird ein erster Schätzwert ($I_1(r,R)$) abgeleitet, der für die Dämpfung aufgrund der Niederschläge charakteristisch ist und der geschätzte Integralwert der Niederschläge gemäß einer einzigen Polarisation ist;
c) ausgehend von dem ersten Schätzwert ($I_1(r, R)$) und der ersten Serie von Meßwerten ($Z_{Ha}(r)$) wird eine Schätzung des ungedämpften Reflektivitätsfaktors ($Z_{Ha}(r)$) und des korrigierten Niederschlagswerts ($R_s$) bestimmt.

3. Verfahren nach einem der Ansprüche 1 und 2, dadurch gekennzeichnet, daß der Verfahrensschritt B den folgenden Schritt enthält:
d) Ausgehend von dem Schätzwert der korrigierten Niederschläge ($R_s$) und einer gegebenen Verteilung der Tropfengröße (DSD) wird ein Schätzwert des ungedämpften Differential-Reflektivitätsfaktors ($Z_{DRs}(r)$) berechnet.

4. Verfahren nach einem der Ansprüche 1 bis 3, dadurch gekennzeichnet, daß der Verfahrensschritt C die folgenden Teilschritte enthält:

e) Ausgehend von der doppelten Meßwertserie des gedämpften Reflektivitätsfaktors ($Z_{Ha}(r)$, $Z_{Va}(r)$) wird der Wert des gedämpften Differential-Reflektivitätsfaktors ($Z_{DRa}(r)$) berechnet;
f) aus dem Wert des gedämpften Differential-Reflektivitätsfaktors ($Z_{DRa}(r)$) und dem Schätzwert des ungedämpften Differential-Reflektivitätsfaktors ($Z_{DRs}(r)$), der sich im Schritt d ergeben hat, wird ein Schätzwert der polarimetrischen Differentialdämpfung ($A_{DP}$) abgeleitet.

5. Verfahren nach einem beliebigen der Ansprüche 1 bis 4, dadurch gekennzeichnet, daß der Schritt D die folgenden Teilschritte enthält:

g) Aus dem Schätzwert der polarimetrischen Differentialdämpfung ($A_{DP}$) wird ein zweiter Schätzwert ($I_2(r,R)$) abgeleitet, der für die Dämpfung aufgrund der Niederschläge charakteristisch ist und das Integral des Niederschlagswerts ist;
h) die ersten und zweiten Schätzwerte ($I_1(r,R)$ und $I_2(r,R)$), die für die Dämpfung aufgrund der Niederschläge charakteristisch sind, werden verglichen;
i) wenn der Vergleich im Teilschritt h angibt, daß die beiden Werte sich voneinander unterscheiden, verändert man mindestens einen der Parameter ($\alpha$, $\beta$) aus dem Teilschritt a und führt erneut die Teilschritte a bis h aus;
j) wenn der Vergleich im Teilschritt h zeigt, daß die beiden Schätzwerte einander gleichen, entnimmt man die Schätzwerte des ungedämpften Reflektivitätsfaktors ($Z_{Hs}(r)$) und der korrigierten Niederschläge ($R_s$).

6. Verfahren nach einem beliebigen der Ansprüche 2 bis 5, dadurch gekennzeichnet, daß der Teilschritt a darin besteht,

a1) die Meßwerte $Z_{Ha}(r)$ aus der ersten Serie über N Radarimpulse zu mitteln,
a2) für jedes Abstandsfenster (i) Schätzwerte der Niederschläge ($\bar{R}_i$) ausgehend von willkürlich festgelegten Parametern ($\alpha$, $\beta$) gemäß folgender Gleichung zu berechnen:

$$\bar{R}_i = [\bar{Z}_{Ha}(r)/\alpha]^{1/\beta}$$

7. Verfahren nach einem beliebigen der Ansprüche 2 bis 6, dadurch gekennzeichnet, daß der Teilschritt b darin besteht,

b1) ausgehend von den Schätzwerten der Niederschläge ($\bar{R}_i$) die Dämpfungskoeffizienten ($\bar{a}_i$) in jedem Entfernungsfenster gemäß folgender Gleichung zu berechnen:

$$\bar{a}_i/k_H = \bar{R}_i^{\gamma H},$$

wobei $k_H$ und $\gamma_H$ vorbestimmte Parameter für eine gegebene Temperatur und eine gegebene Verteilung der Größe der Tropfen sind,
b2) und aus diesen Dämpfungskoeffizienten

($\bar{a}_i$) den ersten Schätzwert ($\bar{I}_1(r,R)$) gemäß folgender Gleichung abzuleiten:

$$\bar{I}_1(r,R) = \sum_{i=1}^{n-1} \bar{a}_i / k_H,$$

wobei n die Anzahl von Entfernungsfenstern für eine Distanz r des Radarsystems ist.

8. Verfahren nach einem beliebigen der Ansprüche 2 bis 7, dadurch gekennzeichnet, daß der Teilschritt c) darin besteht,

c1) ausgehend vom ersten Schätzwert ($\bar{I}_1(r,R)$) einen Dämpfungswert $\bar{A}$ wie folgt zu berechnen:

$$\bar{A} = 2 \cdot \Delta r \cdot k_H \cdot \bar{I}_1(r,R),$$

wobei Δr die Breite eines Entfernungsfensters ist,
c2) die Meßwerte ($Z_{Ha}(r)$) der ersten Serie über N Radarimpulse zu mitteln,
c3) die Summe des Dämpfungswerts $\bar{A}$ und des gemittelten Werts des gedämpften Reflektivitätsfaktors $\bar{Z}_{Ha}(r)$ zu bilden, um einen Schätzwert $Z_{Hs}(r)$ des ungedämpften Reflektivitätsfaktors zu erhalten,
c4) und einen Schätzwert $\bar{R}_s$ des korrigierten Niederschlags gemäß folgender Gleichung zu berechnen:

$$\bar{R}_s = [\bar{Z}_{Hs}(r)/\alpha]^{1/\beta}$$

9. Verfahren nach einem beliebigen der Ansprüche 4 bis 8, dadurch gekennzeichnet, daß der Teilschritt e darin besteht,

e1) das Verhältnis der Meßwerte der Serien beider Kanäle ($Z_{Ha}(r)$, $Z_{Va}(r)$) zu bilden, um die Werte des gedämpften Differential-Reflektivitätsfaktors ($Z_{DRa}(r)$) des Radarsystems zu erhalten,
e2) die Werte des gedämpften Differential-Reflektivitätsfaktors über N Impulse des Radarsystems zu mitteln.

10. Verfahren nach Anspruch 5, dadurch gekennzeichnet, daß der Teilschritt f darin besteht, die Differenz zwischen dem Schätzwert des ungedämpften Differential-Reflektivitätsfaktors ($\bar{Z}_{DRs}(r)$), der im Teilschritt d erhalten wurde, und dem gemittelten Wert des gedämpften Differential-Reflektivitätsfaktors ($\bar{Z}_{DRa}(r)$) zu bilden, um einen Schätzwert der polarimetrischen Differentialdämpfung ($\bar{A}_{DP}(r)$) auf dem Weg des Radarstrahls zu erhalten.

11. Verfahren nach einem beliebigen der Ansprüche 5 bis 10, dadurch gekennzeichnet, daß der Teilschritt g darin besteht, ausgehend vom Schätzwert der polarimetrischen Differentialdämpfung ($\bar{A}_{DP}(r)$) den zweiten Schätzwert $\bar{I}_2(r,R)$ gemäß folgender Gleichung zu berechnen:

$$\bar{I}_2(r,R) = \bar{A}_{DP}(r)/[\Delta r \cdot (k_H - k_V)],$$

wobei $k_V$ ein vorbestimmter Parameter ähnlich wie $k_H$ für die zweite Serie von Meßwerten $Z_{Va}(r)$) ist.

12. Meteorologisches Impulsradarsystem mit doppelter Polarisation, das auf einer Wellenlänge arbeitet, die von den Niederschlägen gedämpft wird, um den Niederschlagswert und den Reflektivitätsfaktor zu bestimmen,

- mit einer Antenne (1) für doppelte Polarisation in Verbindung mit Mitteln (2, 3, 4), um die den beiden orthogonalen Polarisationskanälen $\vec{H}$ und $\vec{V}$ entsprechenden Modi zu extrahieren,
- mit einem Emitter (5, 6), der Impulse an die beiden Kanäle der Antenne liefert,
- mit mindestens einem Empfangskanal (7, 9, 11, 13, 15, 17, 19; 8, 10, 12, 13, 16, 18, 20), um die aus den beiden Kanälen mit zueinander orthogonaler Polarisation kommenden Signale zu behandeln,

dadurch gekennzeichnet, daß es eine digitale Verarbeitungsvorrichtung (21) für das Signal aufweist, die für die Durchführung des Verfahrens nach einem der Ansprüche 1 bis 11 ausgebildet ist.

13. Radarsystem nach Anspruch 12, dadurch gekennzeichnet, daß es am Ausgang der Empfangskanäle logarithmische Verstärker (17, 18) zur Vergrößerung des Dynamikbereichs besitzt und daß die Vorrichtung zur digitalen Verarbeitung (21) am Eingang Wandlermittel (30, 36, 40) besitzt, mit denen die Werte der empfangenen Signale wiederhergestellt werden.

14. Radarsystem nach einem der Ansprüche 12 und 13, dadurch gekennzeichnet, daß es außerdem zwei Doppler-Empfangskanäle (22 bis 24; 25 bis 27) enthält, die je einem Ausgang der Empfangskanäle für die beiden Polarisationen zugeordnet sind.

15. Radarsystem nach einem beliebigen der Ansprüche 12 bis 14, dadurch gekennzeichnet, daß es einen einzigen Empfangskanal besitzt, dem Schaltmittel am Eingang und Ausgang zugeordnet sind, die synchron gesteuert werden, um abwechselnd die beiden Polarisationen zu verarbeiten, wobei der Schalttakt so gewählt ist, daß die gemäß den beiden Polarisationen empfangenen Signale nicht während der Dauer der Umschaltungen dekorreliert werden.

FIG.1

EP 0 870 206 B1

FIG.2